Europäisches Patentamt

European Patent Office

Office européen des brevets

(19)

(11) Publication number: **0 204 039**

**A1**

(12) **EUROPEAN PATENT APPLICATION**

(21) Application number: **85303967.5**

(22) Date of filing: **05.06.85**

(51) Int. Cl.⁴: **C 07 F 5/04**
**C 10 M 139/00**

(43) Date of publication of application:
**10.12.86** Bulletin **86/50**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Horodysky, Andrew Gene**
**139 Weston Avenue**
**Cherry Hill New Jersey 08003(US)**

(72) Inventor: **Ashjian, Henry**
**22 Surrey Lane**
**East Brunswick New Jersey 08816(US)**

(72) Inventor: **Gawel, Henry Anthony**
**18 Sandalwood Drive**
**Clark New Jersey 07066(US)**

(74) Representative: **West, Alan Harry**
**Mobil Court 3 Clements Inn**
**London WC2A 2EB(GB)**

(54) Borated, hydrolyzed epoxides and lubricant compositions containing them.

(57) Borated, hydrolyzed hydrocarbyl epoxides are produced by hydrolyzing hydrocarbyl epoxides in the presence of boric acid and borating the products; they are useful friction-reducing additives for lubricants and have excellent oxidation- and corrosion-inhibiting properties.

EP 0 204 039 A1

BORATED, HYDROLYZED EPOXIDES AND LUBRICANT
COMPOSITIONS CONTAINING THEM

This invention relates to borated hydrolyzed hydrocarbyl
epoxides and to lubricant compositions containing them as multi-
functional additives.

Lubricants are used to reduce the friction between moving
surfaces.  Additives are frequently added to lubricants in minor
amounts, to enhance the friction-reducing properties of those
lubricants without modifying their other physical properties such as
viscosity, density and pour point.

Alcohols have long been known for their lubricity properties when formulated into lubricating oils and for their water
scavenging characteristics when incorporated into fuel formulations.
Hydrocarbon-soluble epoxidized fatty acid esters prepared by the
epoxidation of unsaturated carboxylic acid esters have been used as
anti-wear and anti-friction additives in lubricants, as described in
U.S. Patent 4,244,829.  Borated hydrolysis products of
1-(2-hydroxyalkyl)-2-alkyl or -alkenylimidazolines are known to be
effective friction-modifying additives from U.S. Patent 4,273,665.
Further, vicinal hydroxyl-containing alkyl carboxylates such as
glycerol monooleate have also found widespread use as lubricity
additives.

U.S. Patent 4,410,438 describes borated epoxide additives
and lubricants containing them.   In the preparation of those
additives, an epoxide is reacted with boric acid, boron oxide or an
alkyl borate in the absence of added water.

The present invention is based on the observation that
borated hydrolyzed hydrocarbyl epoxides are capable of significantly
enhancing the friction-reducing properties of lubricants and

simultaneously provide anti-oxidation and high temperature properties to lubricant compositions. The borated compounds also possess
improved solubility characteristics over those of non-borated
derivatives, especially in synthetic oils. Additionally, these
additives are non-corrosive to copper and possess anti-wear
properties and the ability to provide anti-fatigue characteristics
to oils and greases containing them.

According to the invention, there is provided a borated,
hydrolyzed, hydrocarbyl epoxide obtained by hydrolyzing a
hydrocarbyl epoxide having from 14 to 36 carbon atoms with a
substantially stoichiometric amount of water in the presence of a
boric acid catalyst at a temperature of 150 to 250°C; and borating
the resulting diol and/or oligomer formed during hydrolysis.

The invention also provides lubricant compositions
comprising a lubricant and from 0.1 to 10% by weight of such a
borated compound, and a method for reducing the fuel consumption of
internal combustion engines by treating their moving surfaces with
such lubricant compositions.

The additives of the invention are long-chain hydrocarbyl
epoxides which have been hydrolyzed with boric acid catalyst and
borated to form a mixture of borate esters of the corresponding
diols and borate esters of oligomers of the epoxides which
polymerize during hydrolysis. The additive compounds formed in this
way are very different from, and often superior to, borate esters
formed by boration of the corresponding preformed diols made by
traditional hydrolysis of the long-chain epoxides. The hydrocarbyl
groups contain at least 14 carbon atoms and up to 36 carbon atoms.
The epoxide group can be anywhere along the chain, but is preferably
in the 1,2 or terminal position. The hydrocarbyl group can be
straight chain, or branched chain, or contain cyclic groups or
unsaturated groups, but is preferably an alkyl group. Preferred
epoxides include 1,2-epoxynonadecane, 1,2-epoxyheptadecane,
1,2-epoxytetradecane, 1,3-epoxyhexadecane, 1,2-epoxypentadecane,
1,2-epoxyoctadecane and mixtures of similar epoxides.

Lubricant compositions comprising oils of lubricating viscosity and greases prepared therefrom containing these additives possess multi-functional characteristics. Further, when moving surfaces of, for example, internal combustion engines, are treated with lubricant compositions containing these additives, a means of obtaining improved fuel economy for such engines is provided.

The amount of additive in the lubricant compositions may range from 0.1 to 10% by weight of the total lubricant composition, preferably from 0.5 to about 5% by weight, for example from 0.25 to 4% by weight.

The lubricant compositions preferably include other materials such as corrosion inhibitors, viscosity index improvers, extreme pressure agents, detergents, dispersants and antiwear additives, all of which impart their customary properties to the particular compositions and do not detract from the value of the compositions into which they are incorporated. Such additives often include succinimides, sulfonates, phenates, olefin copolymers, methacrylates, zinc dithiophosphates and overbased calcium and magnesium salts. Preferably, however, the friction-reducing additives of the invention are used with zinc dithiophosphates and in such formulations exhibit significant activity. Generally, the total amount of all such additive materials will not exceed about 10 to 20% by weight.

The additives of the invention should contain at least 0.1% of boron and may contain 10% or more of boron. At least 5 to 10% of the available epoxide groups should be borated, although a stoichiometric excess of borating agent can effectively be used.

The lubricants into which the additives can be incorporated include both mineral and synthetic hydrocarbon oils of lubricating viscosity, mixtures of mineral and synthetic oils, and greases prepared therefrom, and other solid lubricants. The synthetic oils may include polyisobutylenes, hydrogenated olefins, polypropylene glycol, di-(2-ethylhexyl) sebacate, dibutyl phthalate, neopentyl esters, pentaerythritol esters, trimethylol propane esters,
fluorocarbons, silicate esters, silanes, hydrogenated mineral oils,
chain-type polyphenyl, siloxanes and silicones, and phenoxy
phenylethers. Preferred are synthetic formulations. Where the
lubricant is to be employed in the form of a grease, the lubricating
oil is generally employed in an amount sufficient to balance the
total grease composition, after accounting for the desired quantity
of the thickening agent and other additive components to be included
in the grease formulation. A wide variety of materials may be
employed as thickening or gelling agents. These may include any of
the conventional metal salts or soaps, such as lithium and calcium
which are dispersed in the lubricating vehicle in grease-forming
quantities to impart to the resulting grease composition the desired
consistency. Included are lithium and calcium 12-hydroxy- stearates
or stearate soaps or similar metal soaps or non-soap thickeners,
such as surface-modified clays and silicas, aryl ureas, calcium
complexes and similar materials. In general, grease thickeners may
be employed which do not melt and dissolve when used at the required
temperature within a particular environment; however, in all other
respects, any materials which are normally employed for thickening
or gelling hydrocarbon fluids for forming grease can be used in
preparing greases in accordance with the invention.

The additive compounds of the invention are prepared by the
reaction of the hydrocarbyl epoxides with water in the presence of a
suitable catalyst, and then borated. The use of traditional catalysts such as sulfuric acid, hydrochloric acid and p-toluene-sulfonic
acid during this reaction step does not form the same product as
that formed by the reaction of epoxide, water and borating agent.
The additive compounds of the invention are uniquely formed in a
one-pot, one-step combined boration/hydrolysis/polymerization
involving the hydrocarbyl epoxide starting materials. The
preferred borating agent is boric acid but other borating agents
such as low-molecular weight trialkyl borates which form boric acid
in the presence of water, can also be used. For convenience, however, the boration and hydrolysis may be carried out in a single pot using substantially stoichiometric amounts of water. The reaction can also be carried out in the presence of an organic solvent having a low boiling temperature such as ethanol or butanol, or another solvent such as toluene or xylene. The reaction time can vary from 2 to about 14 hours. The preferred reaction time is from 4 to about 12 hours. The reaction temperature can vary from about 150°C to 250°C.

The following Examples illustrate the invention.

## EXAMPLE 1

### Borated, Hydrolyzed, 1,2-Epoxy Mixed $C_{15}$-$C_{18}$ Alkanes

245g of 1,2-epoxy mixed $C_{15}$-$C_{18}$ alkanes (obtained commercially and containing the following 1,2-epoxyalkanes - $C_{15}H_{30}O$, 28%; $C_{16}H_{32}O$, 28%; $C_{17}H_{34}O$, 28%; $C_{18}H_{36}H$, 16%; and having an approximate molecular weight of 244), 70g toluene as solvent, 36g water and 41g boric acid were charged to a 2 liter stirred reactor equipped with a Dean-Stark condensing trap. Nitrogen was used to blanket the reaction mixture. The reactants were heated to 100°C and held for 1.5 hours and then heated to 160°C over a period of 4 hours and held at 160°C for 2 additional hours until evolution of water, measured as azeotropic distillate, ceased. The solvent was then removed by vacuum distillation and the product was filtered through diatomaceous earth at approximately 100°C. The product formed an off-white waxy solid upon cooling.

## EXAMPLE 2

### Borated, Hydrolyzed 1,2-Epoxyhexadecane

Approximately 1,000g of 1,2-epoxyhexadecane, 118g water, 193g boric acid and 125g xylene as solvent were charged to a reactor equipped as described in Example 1. The reaction mixture was heated to 105°C and held for 12 hours and then the temperature was increased to 225°C until evolution of water, measured as azeotropic distillate, ceased. The solvent was then removed by vacuum distillation and the product was filtered. The product formed an off-white waxy solid upon cooling.

## EXAMPLE 3

### Borated, Hydrolyzed, 1,2-Epoxyhexadecane

Approximately 1,000g of 1,2-epoxyhexadecane, 118g water, 258.3g boric acid and 125g xylene were charged to a reactor equipped as described in Example 1. The reaction mixture was heated to 105°C and held for 12 hours and then the temperature was increased to 225°C until water evolution ceased. The solvent was removed by vacuum distillation and the product was filtered to form a clear amber fluid which became an off-white waxy solid upon cooling to room temperature.

The products of the above Examples were blended into a fully formulated synthetic automotive engine oil and evaluated using the Low Velocity Friction Apparatus.

### Low Velocity Friction Apparatus (LVFA)

The Low Velocity Friction Apparatus (LVFA) is used to measure the friction of test lubricants under various loads, temperatures, and sliding speeds. The LVFA consists of a flat SAE 1020 steel surface (diam. 38.1 mm) which is attached to a drive shaft and rotated over a stationary, raised narrow ringed SAE 1020 steel surface (area 52mm$^2$). Both surfaces are submerged in the test lubricant. Friction between the steel surfaces is measured as a function of the sliding speed at a lubricant temperature of 120°C. The friction between the rubbing surfaces is measured using a torque arm strain guage system. The strain guage output, which is calibrated to be equal to the coefficint of friction, is fed to the Y axis of an X-Y plotter. The speed signal from the tachometer-generator is fed to the X-axis. To minimize external friction, the piston is supported by an air bearing. The normal force loading the rubbing surfaces is regulated by air pressure of the bottom of the piston. The drive system consists of an

F-1906-L — 8 — 0204039

infinitely variable-speed hydraulic transmission driven by a 370 W electric motor. To vary the sliding speed, the output speed of the transmission is regulated by a lever-cam-motor arrangement.

Procedure

The rubbing surfaces and 12-13 ml of test lubricant are placed on the LVFA. A 3450 kPa load is applied, and the sliding speed is maintained at 9.15 m/minute at ambient temperature for a few minutes. A plot of coefficients of friction ($U_k$) over a range of sliding speeds, 1.5 to 12.2 m/minute (25-195 rpm), is obtained. A minimum of three measurements is obtained for each test lubricant. Then, the test lubricant and specimens are heated to 120°C, another set of measurements is obtained, and the system is run for 50 minutes at 120°C, 3450 kPa, and 12.2 m/minute sliding speed. Freshly polished steel specimens are used for each run. The surface of the steel is parallel ground to 0.1 to 0.2 μm. The percentages by weight are percentages by weight of the total lubricating oil composition, including the usual additive package. The data are percent decrease in friction according to:

$$\frac{(U_k \text{ of oil alone}) - (U_k \text{ of oil plus additive}}{(U_k \text{ of oil alone})} \times 100$$

The value for the oil alone would be zero as shown in the Table below.

## TABLE 1

### Friction Test Results Using
### Low Velocity Friction Apparatus

| | Additive Conc. in Base Blend | % Reduction in Coefficient of Friction in LVFA at | |
|---|---|---|---|
| | | 1.5 m/min | 9.15 m/min |
| Base Blend (fully formulated SAE 5W/30 synthetic engine oil containing detergent/dispersant/inhibitor package) | --- | 0 | 0 |
| Example 1 Borated, hydrolyzed, 1,2-epoxy mixed $C_{15}$-$C_{18}$ alkanes | 1 | 24 | 21 |
| Example 2 Borated, hydrolyzed, 1,2-epoxy-hexadecane | 1 0.5 | 40 38 | 30 33 |
| Example 3 Borated, hydrolyzed, 1,2-epoxy-hexadecane | 1 0.5 | 24 30 | 16 18 |

From the data in Table 1, it is readily apparent that the additive compounds significantly improve the friction-reducing properties of lubricants into which they are incorporated. For example, an almost 40% reduction in friction was achieved with the use of only 0.5% of the product of Example 2.

The oxidation stability of the additives was also measured by evaluating the additive blends in 200 second solvent paraffinic neutral lubricating oil using the Catalytic Oxidation Test at 163°C for 40 hours. The test lubricant composition is subjected to a stream of air which is bubbled through the composition at a rate of 5 liters per hour at 163°C for 40 hours. Present in the composition are metals commonly used as materials of engine construction; namely

  (a)  100 $cm^2$ of sand-blasted iron wire
  (b)  5 $cm^2$ of polished copper wire
  (c)  5.6 $cm^2$ of polished aluminum wire; and
  (d)  1.08 $cm^2$ of polished lead surface.

Inhibitors for oxidation of for the oil are rated on the basis of prevention of oil-deterioration as measured by the increase in acid formation or neutralization number (NN) and kinematic viscosity (KV). The results of the test are set out in Table 2.

### TABLE 2
### Oxidation Characteristics
### Catalytic Oxidation Test, 40 Hours at 163°C

| | Additive Conc. Weight % | % Increase in Viscosity of Oxidized Oil at 100°C | Neutralization Number | Lead Loss, mg |
|---|---|---|---|---|
| Example Base Oil (200 second solvent paraffinic neutral lubricating oil) | -- | 67 | 3.62 | 1.2 |
| Example 1 Borated, hydrolyzed, 1,2-epoxy mixed $C_{15}$-$C_{18}$ alkanes | 1 0.5 | 17 19 | 2.08 2.03 | 0.0 0.0 |

The data in Table 2 clearly show the stability exhibited by the multi-purpose additives in the presence of catalytic metals under severe oxidizing conditions at elevated temperatures.

The product of Example 1 was further subjected to the Copper Strip Corrosivity Test. The test was run in 200 second, solvent paraffinic neutral lubricating oil in accordance with ASTM D-130-80. The results set out in Table 3 clearly show the borate esters to be non-corrosive to copper.

## TABLE 3
### Copper Strip Corrosivity Characteristics

| | Additive Conc. Weight % | Test Rating ASTM D130-80 3 hrs at 121°C | ASTM D130-80 6 hrs at 99°C |
|---|---|---|---|
| Example 1 | | | |
| Borated, hydrolyzed, 1,2-epoxy mixed $C_{15}$-$C_{18}$ alkanes | 1 | 1A | 1A |

These data illustrate that borated boron-catalyzed hydrolyzed hydrocarbyl epoxides can be used to substantially improve the gasoline fuel economy of already fuel efficient synthetic motor oils, and a variety of other lubricants (including both synthetic and mineral oil-based automotive and industrial lubricants and greases). Furthermore, these additives have multi-functional characteristics. In addition to friction reducing properties, they also provide anti-corrosion, anti-oxidation, anti-wear and high temperature properties not generally available in a single lubricant additive.

CLAIMS:

1. A borated hydrolyzed hydrocarbyl epoxide obtained by hydrolyzing a hydrocarbyl epoxide having from 14 to 36 carbon atoms with a substantially stoichiometric amount of water in the presence of a boric acid catalyst at a temperature of 150 to 250°C; and borating the resulting diol and/or oligomer formed during hydrolysis.

2. A reaction product according to claim 1, wherein the hydrocarbyl epoxide is a terminal alkyl epoxide.

3. A reaction product according to claim 1, wherein the hydrocarbyl epoxide is 1,2-epoxy mixed $C_{15}$-$C_{18}$ alkanes.

4. A reaction product according to claim 1, wherein the hydrocarbyl epoxide is 1,2-epoxyhexadecane.

5. A lubricant composition comprising a lubricant and from 0.1 to 10% by weight of a borated hydrolyzed hydrocarbyl epoxide according to any one of claims 1 to 4.

6. A lubricant composition according to claim 5, wherein the lubricant is an oil of lubricating viscosity.

7. A lubricant according to claim 6, wherein the lubricating oil is a mineral oil, a synthetic oil or a mixture thereof.

8. A lubricant composition according to claim 5, wherein the lubricant is a grease.

9. A lubricant compositon according to claim 8, wherein the grease has been prepared from a mineral oil, a synthetic oil or a mixture thereof.

10. A method for reducing the fuel consumption of an internal combustion engine which comprises treating the moving surfaces of the engine with a lubricant composition according to any one of claims 5 to 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 107 734 (CHEVRON RESEARCH) <br> * page 1, lines 36-51, page 2, lines 1-9 * | 1-5 | C 07 F 5/04 <br> C 10 M 139/00 |
| A | EP-A-0 075 478 (MOBIL OIL) <br> * page 3, lines 1-9, claim 4 * | 1 | |
| E | US-A-4 522 734 (MOBIL OIL) <br> * examples 1-3, claims 1-21 * | 1-10 | |
| A | EP-A-0 067 002 (THE LUBRIZOL CORPORATION) <br> * claim 1 * | 1 | |
| A | DE-B-2 503 735 (BASF) <br> * claim * | 1 | **TECHNICAL FIELDS SEARCHED (Int. Cl.4)** |
| D,A | US-A-4 410 438 (MOBIL OIL) <br> * claims 1-5 * | 1 | C 07 F 5/04 <br> C 10 M 139/00 |

The present search report has been drawn up for all claims

| Place of search | Date of completion of the search | Examiner |
|---|---|---|
| BERLIN | 21-01-1986 | KAPTEYN H G |